# EUROPEAN PATENT APPLICATION

(11) **EP 3 070 666 A1**
(43) Date of publication of application: **21.09.2016**
(21) Application number: 14861611.3
(22) Date of filing: 10.11.2014
(51) Int. Cl.: G06Q 50/12, G06Q 30/06, G07G 1/12

(54) **SEAT AVAILABILITY MANAGEMENT SYSTEM AND SEAT AVAILABILITY MANAGEMENT METHOD**

(30) Priority: 13.11.2013 JP 2013235361
(71) Applicant: Recruit Holdings Co., Ltd., Tokyo 104-0061 (JP)
(72) Inventor: SASAKI, Kotaro, Tokyo 100-6640 (JP); SHIBUYA, Hiroyuki, Tokyo 100-6640 (JP)
(74) Representative: EIP
(86) International application number: PCT/JP2014/079722
(87) International publication number: WO 2015/072425

(57) **Abstract**

To effectively call in customers. Provided are a frame display unit that displays frames that respectively correspond to a plurality of tables arranged in a store on a screen of a store terminal 2, a vacant seat presence/absence change unit that, in a case where one frame has been selected from the frames displayed on the screen, changes vacant seat presence/absence information that is stored in a vacant seat presence/absence information DB 5b in correspondence with the selected frame to a content indicating that it is not vacant, a vacant seat status update unit that updates vacant seat status information that indicates what extent of vacancy is present in tables in a store stored in a vacant seat status information DB 5c on the basis of the vacant seat presence/absence information, and a vacant seat status providing unit that provides the vacant seat status information to a user terminal 3.

## Description

### Technical Field

The present invention relates to a vacant seat management system and a vacant seat management method.

### Background Art

In the following Patent Document 1, a method of managing an appointment schedule in a beauty parlor that a plurality of beauticians is disposed is disclosed. In this method, the schedule of each beautician is managed by inserting an appointment plate of the beautician into a time-series frame of a schedule table every time an appointment is accepted, and a frame that any appointment is entered in the frames of the schedule table is regarded as an opening time of the beautician.

### Citation List

### Patent Document

Patent Document 1: Japanese Patent Application Laid-Open No. 2007-156831

### Summary

### Technical Problem

Although in the method described in Patent Document 1, the above-mentioned schedule table is managed in order that the beauticians browse it, it is not provided to customers. However, if it is possible to provide the opening times of the beauticians to the customers, it will become possible to effectively call in the customers. Then, such an advantageous effect is expected to be similarly obtained also in a case of providing a vacant status of tables to customers in stores that wait on customers such as restaurants and so forth.

The present invention has been made in order to solve the above-mentioned problem and to provide a vacant seat management system and a vacant seat management method making it possible to effectively call in the customers is set as one object thereof.

### Solution to Problem

A vacant seat management system that is one aspect of the present invention includes a frame display unit that displays frames that respectively correspond to a plurality of tables that are arranged in a store on a screen, a vacant seat presence/absence change unit that, in a case where the one frame has been selected from the frames that have been displayed by the frame display unit, changes vacant seat presence/absence information indicating whether the table that is stored in correspondence with the selected frame is vacant or not to a content indicating that it is not vacant, a vacant seat status update unit that updates vacant seat status information indicating what extent of vacant seats is present in the store on the basis of the vacant seat presence/absence information, and a vacant seat status providing unit that provides the vacant seat status information.

It also may be made to further include a frame information display unit that, in a case where the one frame has been selected from the frames that have been displayed by the frame display unit and slip information corresponding to the selected frame has been input, displays frame information that includes a time elapsed after having sat at the table, a number of persons who use the table and a sum total of commodities that have been ordered at the table in the frame that has been selected on the basis of the input slip information.

It also may be made such that the frame display unit, in a case where a plurality of the frames in the frames that have been displayed on the screen have been selected in the lump and some of the plurality of selected frames have been brought into contact with one another or superimposed, changes the plurality of selected frames to the one frame and displays it on the screen, and the frame information display unit displays a longest time in the elapsed times, an added-up value of the numbers of persons and an added-up value of the sum totals that correspond to the plurality of frames, respectively as the elapsed time, the number of persons and the sum total in the one frame that has been changed from the plurality of frames by the frame display unit.

It also may be made to further include a reservation information storage unit that stores reservation information at least including a reserved time and a reserved number of persons, in which the frame information display unit, in a case where one piece of the reservation information has been selected from the reservation information that has been stored by the reservation information storage unit and the one frame has been selected from the frames that have been displayed by the frame display unit, displays the frame information in the selected one frame on the basis of the selected one piece of the reservation information, and the vacant seat presence/absence change unit changes the vacant seat presence/absence information that is stored in correspondence with the selected one frame together with the reservation information to a content indicating that it is not vacant.

A vacant seat management method that is one aspect of the present invention includes the frame displaying step of displaying frames that respectively correspond to a plurality of tables that are arranged in a store on a screen, the vacant seat presence/absence changing step of, in a case where the one frame has been selected from the frames that have been displayed in the frame displaying step, changing vacant seat presence/absence information indicating whether the table that is stored in correspondence with the selected frame is vacant or not to a content indicating that it is not vacant, the vacant seat status updating step of updating vacant seat status information indicating what extent of vacant seats is present in the store on the basis of the vacant seat presence/absence information, and the vacant seat status providing step of providing the vacant seat status information.

It also may be made to further include the frame information displaying step of, in a case where the one frame has been selected from the frames that have been displayed in the frame displaying step and slip information corresponding to the selected frame has been input, displaying frame information that includes a time elapsed after having sat at the table, a number of persons who use the table and a sum total of commodities that have been ordered at the table in the frame that has been selected on the basis of the input slip information.

It also may be made such that the frame displaying step, in a case where a plurality of the frames in the frames that have been displayed on the screen have been selected in the lump and some of the plurality of selected frames have been brought into contact with one another or superimposed, changes the plurality of selected frames to the one frame and displays it on the screen, and the frame information displaying step displays a longest time in the elapsed times, an added-up value of the numbers of persons and an added-up value of the sum totals that correspond to the plurality of the frames, respectively as the elapsed time, the number of persons and the sum total in the one frame that has been changed from the plurality of frames in the frame displaying step.

It also may be made to further include the reservation information storing step of storing reservation information that includes at least a reserved time and a reserved number of persons, in which the frame information displaying step, in a case where one piece of the reservation information has been selected from the reservation information that has been stored in the reservation information storing step and the one frame has been selected from the frames that have been displayed in the frame displaying step, displays the frame information in the selected one frame on the basis of the selected one piece of the reservation information, and the vacant seat presence/absence changing step changes the vacant seat presence/absence information that is stored in correspondence with the selected one frame together with the reservation information to a content indicating that it is not vacant.

### Advantageous Effects of Invention

According to the present invention, it becomes possible to effectively call in the customers.

### Brief Description of Drawings

Fig. 1 is a diagram exemplifying a configuration of a vacant seat management system in an embodiment.
Fig. 2 is a diagram exemplifying a functional configuration of a store terminal illustrated in Fig. 1.
Fig. 3 is a diagram exemplifying a table frame to be displayed on a screen of a store terminal.
Fig. 4 is a diagram illustrating a display example when putting together two table frames into one.
Fig. 5 is a diagram illustrating a display example when reflecting observation information on the table frame.
Fig. 6 is a diagram exemplifying a functional configuration of a vacant seat management server illustrated in Fig. 1.
Fig. 7 is a sequence sheet for describing an operation of the unoccupied seat management system after customers have sat at the table in the store until they go out of the store.
Fig. 8 is a flowchart for describing an operation when the vacant seat management server provides vacant seat status information to a user terminal.
Fig. 9 is a diagram exemplifying a display screen of the store terminal in an altered example.

### Description of Embodiments

In the following, preferred embodiments of a vacant seat management system and a vacant seat management method pertaining to the present invention will be described with reference to the appended drawings. Incidentally, the embodiments that will be described in the following are merely illustrative and will not exclude application of various alterations and techniques that are not clearly described in the embodiments. That is, the present invention can be embodied by altering in a variety of ways within a range not deviating from the gist thereof.

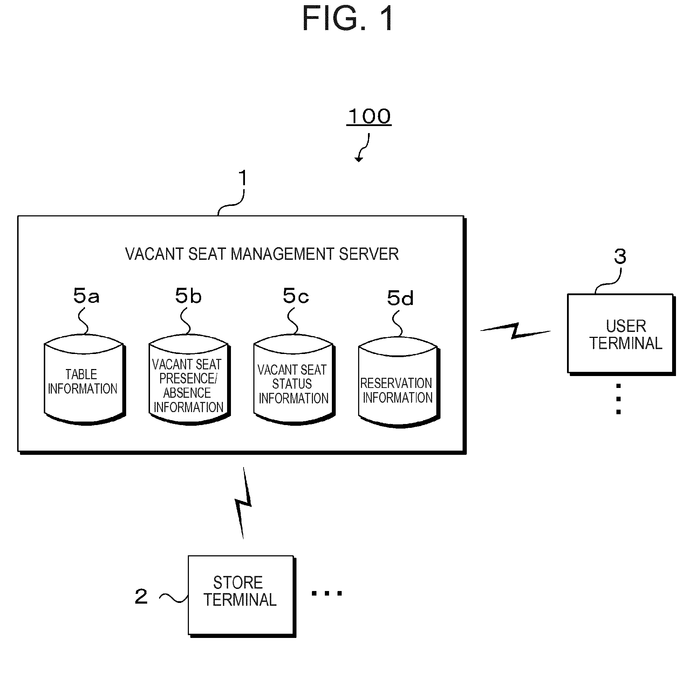

First, a configuration of a vacant seat management system according to an embodiment will be described with reference to Fig. 1. A vacant seat management system 100 is equipped with, for example, a vacant seat management server 1 and a store terminal 2.

The vacant seat management system 100 is a system that manages a vacant seat status of tables arranged in a store that waits on customers and provides it to a user terminal 3. As the store that waits on the customers, for example, a restaurant corresponds thereto. In the following, devices and so forth that configure the vacant seat management system 100 will be described in detail.

The store terminal 2 is a terminal that the store that waits on the customers possesses, and a computer device such as, for example, a tablet type terminal and so forth can be used.

The user terminal 3 is a terminal that a user who will become a customer of the store operates. The user terminal 3 may be a mobile terminal such as a smartphone, a mobile phone, a personal digital assistant and so forth and may be a computer device such as a PC (personal computer) terminal and so forth, for example.

The vacant seat management server 1 is a server device that manages a vacant seat status, a reservation status and so forth of each store and provides the vacant seat status of each store to the user terminal 3. The vacant seat management server 1 is exemplarily equipped with a table information (frame information) DB (data base) 5a, a vacant seat presence/absence information DB 5b, a vacant seat status information DB 5c, and a reservation information DB 5d.

The table information DB 5a stores information for every table that is arranged in the store as table information. The table information includes, for example, a store ID item, a table ID item, an elapsed time item, a number-of-persons item and an item for a sum total of ordered commodities as data items. The store ID item stores identification information for specifying the store. The table ID item stores identification information for specifying the table. The elapsed time item stores an elapsed time after having sat at the table. This elapsed time can be calculated by using a time that the customers have sat at the table and a current time and is settled when accounting. The number-of-persons item stores the number of persons who use the table. The sum total item for the ordered commodities stores a value that a charge for each commodity ordered at the table, a tax and so forth have been summed up.

The vacant seat presence/absence information DB 5b stores presence/absence of vacant seats at each table as vacant seat presence/absence information. The vacant seat presence/absence information includes, for example, the store ID item, the table ID item and a vacant seat presence/absence item as the data items. The store ID item stores the identification information for specifying the store. The table ID item stores the identification information for specifying the table. The vacant seat presence/absence item stores information indicating whether the table is vacant or not. As the information indicating whether it is vacant or not, for example, "Vacancy Available" indicating that it is vacant and "No Vacancy" indicating that it is not vacant can be used.

The vacant seat status information DB 5c stores a vacant seat status in the store as vacant seat status information. The vacant seat status information includes, for example, the store ID item, the table ID item and a vacant seat status item as the data items. The store ID item stores the identification information for specifying the store. The table ID item stores the identification information for specifying the table. The vacant seat status item stores vacant seat status information indicating what extent of vacancy is present for the tables in the store. As the vacant seat status information, for example, information indicating "Vacant Seat Available", "Crowded", "No Vacant Seat" and so forth corresponds thereto.

The reservation information DB 5d stores information on reservation as reservation information. The reservation information includes, for example, the store ID item, a subscriber's name item, a reserved time item and a reserved-number- of-persons item as the data items. The store ID item stores the identification information for specifying the store. The subscriber's name item stores the name of a customer who has made a reservation. The reserved time item stores a start time reserved. The reserved-number-of-persons item stores the reserved number of persons.

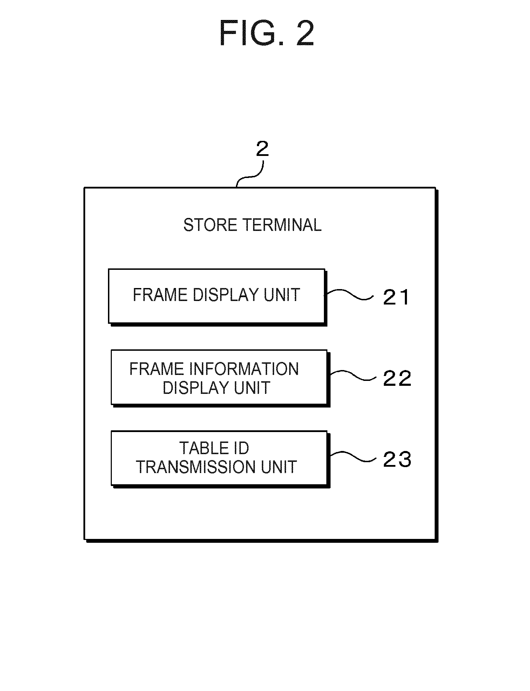

A functional configuration of the store terminal 2 in the embodiment will be described with reference to Fig. 2. The store terminal 2 has, for example, a frame display unit 21, a frame information display unit 22, and a table ID transmission unit 23.

The frame display unit 21 displays frames (hereinafter, referred to as "table frames") that have been made to respectively correspond to the plurality of tables arranged in the store on the screen.

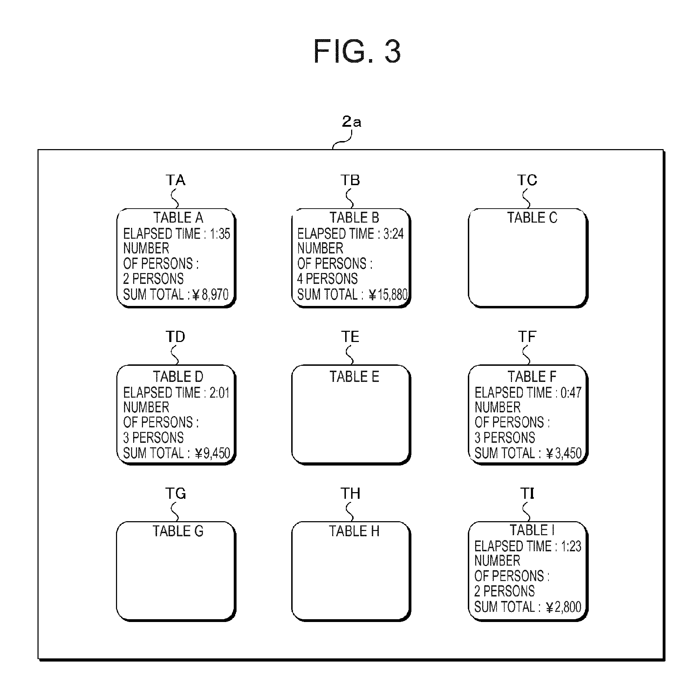

The table frames to be displayed on the screen of the store terminal 2 are exemplified in Fig. 3. Nine table frames TA to TI that correspond to the nine tables arranged in the store are being displayed on a touch-panel type screen 2a illustrated in Fig. 3. It is possible to set display coordinates that serve as a reference for each of the table frames TA to TI. It becomes possible to display the respective table frames TA to TI on the touch-panel type screen 2a in an arrangement state that is the same as the arrangement state of the tables in the store by setting the display coordinates that serve as the reference of each of the table frames TA to TI with the arrangement state of the tables in the store being set as a reference.

Since the arrangement state of the tables in the store can be freely changed at any time from the reference position, also the display positions of the table frames TA to TI are made optionally changeable. When changing the display positions of the table frames TA to TI, for example, the table frame to be a changing object is selected with a finger or a touch pen and is moved to a position to which it is to be moved while selecting it, and selection is cancelled by detaching the finger or the touch pen. Thereby, the display position of the selected table frame is changed to the display position after movement.

In a case where the table frame that has been displayed on the screen has been moved on the screen while it is being selected, the frame display unit 21 illustrated in Fig. 2 changes the display position of the selected frame to the position when selection has been cancelled.

In addition, since there are cases where the tables in the store are put together and the tables that have been put together are dispersed in accordance with the number of customers and so forth, also the table frames TA to TI are made such that they can be put together and dispersed. When putting the table frames TA to TI together, for example, the plurality of table frames to be put together is selected with the finger or the touch pen, some are brought into contact with one another or superimposed while selecting them and then selection is cancelled by detaching the finger or the touch pen. Thereby, the plurality of selected table frames is changed to one table frame.

In a case where the plurality of table frames in the tables displayed on the screen has been selected in the lump and some of the plurality of selected table frames have been brought into contact with one another or superimposed, the frame display unit 21 illustrated in Fig. 2 changes the plurality of selected table frames to one frame and displays it on the screen.

When dispersing the table frames TA to TI that have been put together, for example, the table frame to be dispersed is selected with two fingers or the touch pen and selection is cancelled by respectively moving the two fingers or the touch pen in different directions while selecting it. Thereby, the selected table frame is changed to two table frames.

In a case where one table frame has been selected from the table frames displayed on the screen, and an instruction to move in the different directions has been input for this selected table frame, the frame display unit 21 illustrated in Fig. 2 changes the selected one table frame to the two table frames and displays them on the screen.

The frame information display unit 22 illustrated in Fig. 2 displays, in the table frame displayed on the screen, the table information on the table corresponding to that table frame. As the table information to be displayed in the table frame, for example, the table name, the time elapsed after having sat at the table, the number of persons who use the table and the sum total of the commodities that have been ordered at the table correspond thereto. In the table frame TA illustrated in Fig. 3, "Table A" is being displayed as the table name, "1:35" is being displayed as the elapsed time, "Two Persons" is being displayed as the number of persons, and "¥8,970" is being displayed as the sum total of the ordered commodities. Although in the four table frames TC, TE, TG and TH illustrated in Fig. 3, only the table names are respectively displayed, such a display state indicates that that table is vacant. Incidentally, the table names are managed in correspondence with the table IDs.

In a case where slip information on a certain table has been input, the frame information display unit 22 illustrated in Fig. 2 displays the above-mentioned table information in the table frame corresponding to that table on the basis of the input slip information and transmits the input slip information to the vacant seat management server 1.

The slip information includes, for example, the store ID item, the table ID item, a sitting time item, the number-of-persons item, an ordered commodity item and a charge item as the data items. The store ID item stores the identification information for specifying the store. The table ID item stores the identification information for specifying the table. The sitting time item stores the time that they have sat at the table. The number-of-persons item stores the number of persons who use the table. The ordered commodity item stores identification information for specifying the ordered commodity. The charge item stores the charge for the ordered commodity.

The slip information is input from above the screen of the store terminal 2. One example of a procedure when inputting the slip information will be described in the following. First, when an instruction saying that slip input is started is input and one table frame is selected from the table frames displayed on the screen, a pop-up screen is displayed on the screen. Then, the number of persons who use the table is input from the pop-up screen. Then, the ordered commodities and the quantity are input from the pop-up screen. Finally, an instruction saying that the slip input is terminated is input.

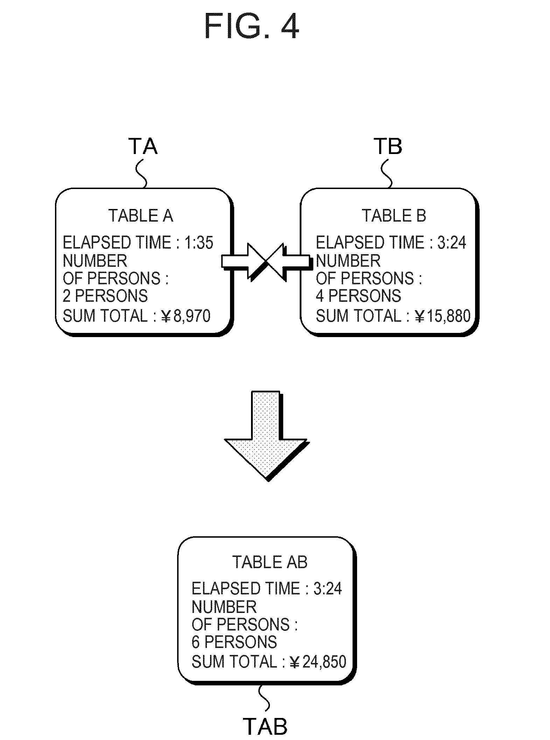

In a case where the plurality of table frames has been put together into one by the frame display unit 21, the frame information display unit 22 illustrated in Fig. 2 displays a longest time in the elapsed times, an added-up value of the numbers of persons and an added-up value of the sum totals corresponding to the plurality of table frames in the one table frame after changed, respectively as the elapsed time, the number of persons and the sum total. It will be specifically described with reference to Fig. 4.

As illustrated in Fig. 4, in a case where the two table frames TA and TB have been put together into one table frame TAB, "3:24" that is longer in "1:35" that is the elapsed time of the table frame TA and "3:24" that is the elapsed time of the table frame TB is displayed on Elapsed Time in the table frame TAB. "6 Persons" that is the added-up value of "2 Persons" that is the number of persons of the table frame TA and "4 Persons" that is the number of persons of the table frame TB is displayed on Number of Persons in the table frame TAB. "¥24,850" that is the added-up value of "¥8,970" that is the sum total of the table frame TA and "¥15,880" that is the sum total of the table frame TB is displayed on Sum Total.in the table frame TAB.

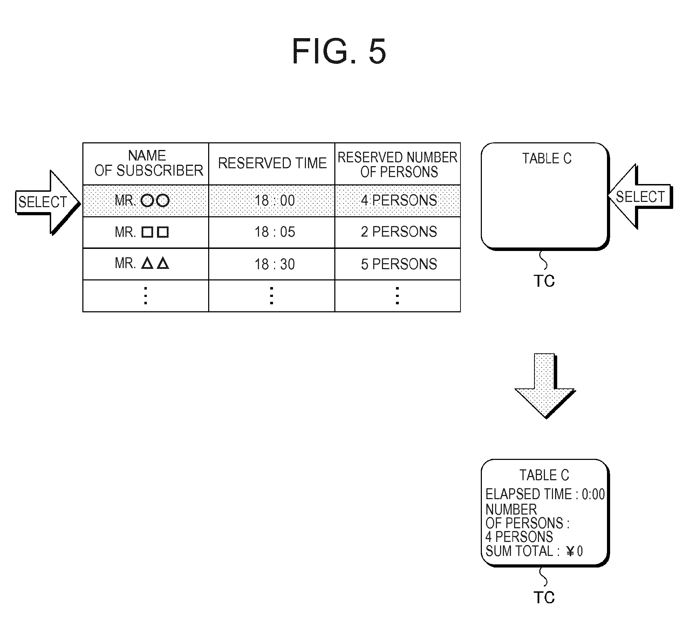

In a case where one piece of the reservation information has been selected from the reservation information stored in the reservation information DB 5d and one table frame has been selected from within vacant state tables frames that have been displayed by the frame display unit 21, the frame information display unit 22 illustrated in Fig. 2 displays the table information in the selected one table frame on the basis of the selected one piece of the reservation information. It will be specifically described with reference to Fig. 5.

In a case where the reservation information that is present at the uppermost stage has been selected and the vacant state table frame TC has been selected as illustrated in Fig. 5, "18:00" that is the reserved time included in the selected reservation information is set to the start time when calculating the elapsed time to be displayed on the table frame TC and the elapsed time from "18:00" is displayed on an elapsed time column in the table frame TC. In addition, "4 Persons" that is the number of persons included in the selected reservation information is displayed on a number-of-persons column in the table frame TC.

In a case where one table frame has been selected from within the vacant state table frames that have been displayed by the frame display unit 21, the table ID transmission unit 23 illustrated in Fig. 2 transmits the table ID corresponding to the selected table frame to the vacant seat management server 1.

In a case where account processing has been started and a receipt issuance request has been transmitted to a register terminal (not illustrated), the table ID transmission unit 23 transmits the table ID corresponding to the table frame that is a processing object to the vacant seat management server 1. The count processing and the receipt issuance request can be started by selecting, for example, a process start button that has been displayed on the screen of the store terminal 2. Incidentally, timing that the table ID is transmitted to the vacant seat management server 1 is not limited to a time point that the receipt issuance request has been transmitted and may be, for example, a time point that the count processing has been terminated.

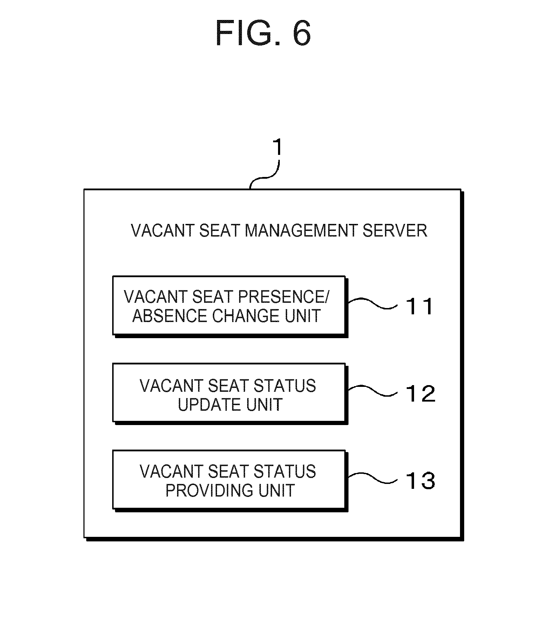

A functional configuration of the vacant seat management server 1 in the embodiment will be described with reference to Fig. 6. The vacant seat management server 1 has, for example, a vacant seat presence/absence change unit 11, a vacant seat status update unit 12, and a vacant seat status providing unit 13.

In a case where the table ID corresponding to the vacant state table frame has been received from the store terminal 2, the vacant seat presence/absence change unit 11 changes the vacant seat presence/absence information that is stored in the vacant seat presence/absence information DB 5b in correspondence with the received table ID to "No Vacancy" indicating that it is not vacant.

In a case where the table ID corresponding to the sitting state table frame has been received from the store terminal 2, the vacant seat presence/absence change unit 11 changes the vacant seat presence/absence information that is stored in the vacant seat presence/absence information DB 5b in correspondence with the received table ID to "Vacancy Available" indicating that it is vacant.

The vacant seat status update unit 12 updates the vacant seat status information in the vacant seat status information DB 5c on the basis of the vacant seat presence/absence information in the vacant seat presence/absence information DB 5b that is updated any time by the store terminal 2. In the following, it will be specifically described.

The vacant seat status update unit 12 calculates the number of tables that are vacant in the tables that are present in the store on the basis of the vacant seat presence/absence information. The vacant seat status update unit 12 determines the vacant seat status in accordance with the calculated number of the vacant tables. For example, in a case where the number of the vacant tables is at least 3 tables, the vacant state status is set to "Vacant Seat Available". In a case where the number of the vacant tables is not more than 2 tables, the vacant seat status is set to "Crowded". In a case where the number of the vacant tables is 0, the vacant seat status is set to "No Vacant Seat".

The vacant seat status providing unit 13 provides the vacant seat status information indicating the vacant seat status to the user terminal 3. As a providing method, for example, to display it on a specific access destination that is designated by an application installed in the user terminal 3, and to display it by incorporating it into an e-mail to be transmitted to the user terminal 3 correspond thereto.

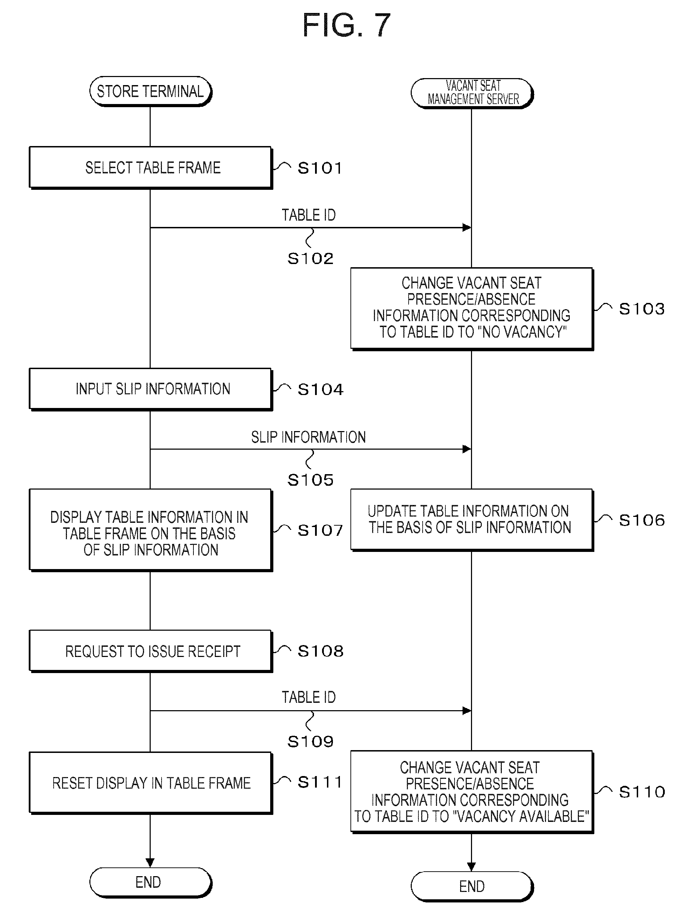

Next, an operation of the vacant seat management system after the customers have sat at the table in the store until they go out of the store will be described with reference to Fig. 7.

First, a store clerk guides the customers to a vacant table in the store and selects the table frame corresponding to the table that he has guided the customers from within the table frames that are being displayed on the screen of the store terminal 2 (step S101). Thereby, the table ID transmission unit 23 of the store terminal 2 transmits the table ID corresponding to the selected table frame to the vacant seat management server 1 (step S102).

Then, the vacant seat presence/absence change unit 11 of the vacant seat management server 1 changes the vacant seat presence/absence information that is stored in the vacant seat presence/absence information DB 5b in correspondence with the received table ID to "No Vacancy" (step S103).

Then, the store clerk inputs the slip information from the store terminal 2 (step S104). Thereby, the store terminal 2 transmits the input slip information to the vacant seat management server 1 (step S105).

Then, the vacant seat management server 1 updates the table information that is stored in the table information DB 5a on the basis of the received slip information (step S106).

On the other hand, the frame information display unit 22 of the store terminal 2 displays the table information in the table frame corresponding to that slip information, on the basis of the slip information that has been input in the above-mentioned step S104 (step S107).

Then, when the count processing is started at the store terminal 2 and the receipt issuance request is transmitted to the register terminal (step S108), the table ID transmission unit 23 of the store terminal transmits the table ID corresponding to the table frame that is the processing object to the vacant seat management server 1 (step S109).

Then, the vacant seat presence/absence change unit 11 of the vacant seat management server 1 changes the vacant seat presence/absence information that is stored in the vacant seat presence/absence information DB 5b in correspondence with the received table ID to "Vacancy Available" (step S110).

On the other hand, the frame information display unit 22 of the store terminal 2 resets the display in the table frame that has become the processing object in the above-mentioned step S108 (step S111).

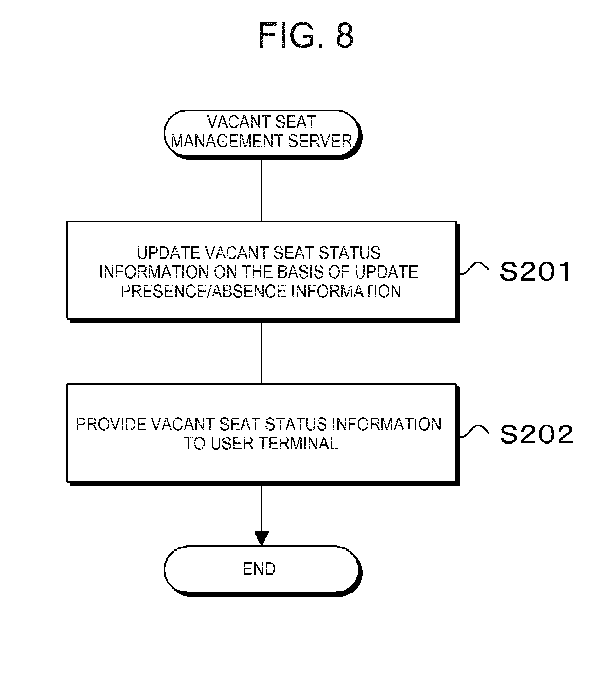

Next, an operation when the vacant seat management server provides the vacant seat status information to the user terminal 3 will be described with reference to Fig. 8. This operation is repetitively performed while the vacant seat management system 100 is operating.

First, the vacant seat status update unit 12 of the vacant seat management server 1 determines the vacant seat status on the basis of the vacant seat presence/absence information that is stored in the vacant seat presence/absence information DB 5b and updates the vacant seat status information that is stored in the vacant seat status information DB 5c (step S201).

Then, the vacant seat status providing unit 13 of the vacant seat management server 1 provides the vacant seat status information that is stored in the vacant seat status information DB 5c to the user terminal 3 (step S201).

As described above, according to the vacant seat management system 100 in the embodiment, the store terminal 2 has the frame display unit 21 and thereby the table frames that respectively correspond to the plurality of tables that are arranged in the store can be displayed on the screen, the vacant seat management server 1 has the vacant seat presence/absence change unit 11 and thereby, in a case where one table frame has been selected from within the vacant state table frames that have been displayed on the screen of the store terminal 2, the vacant seat presence/absence information that is stored in the vacant seat presence/absence information DB 5b in correspondence with this selected table frame can be changed to "No Vacancy", the vacant seat management server 1 has the vacant seat status update unit 12 and thereby the vacant seat status information that is stored in the vacant seat status information DB 5c can be updated on the basis of the vacant seat presence/absence information that is stored in the vacant seat presence/absence information DB 5b, and the vacant seat management server 1 has the vacant seat status providing unit 13 and thereby the vacant seat status information that is stored in the vacant seat status information DB 5c can be provided to the user terminal 3.

Thereby, since it becomes possible to provide the vacant seat status information indicating what extent the tables in the store are vacant to the user terminal 3 in real time, it becomes possible to effectively call in the customers to the store.

In addition, according to the vacant seat management system 100 in the embodiment, the store terminal 2 further has the frame information display unit 22 and thereby, in a case where one table frame has been selected from within the vacant state table frames that have been displayed on the screen and the slip information corresponding to this selected table frame has been input, the table information that includes the elapsed time after having sat at the table, the number of persons who use the table and the sum total of the commodities ordered at the table can be displayed in the table frame that has been selected on the basis of the input slip information.

### [Altered Example]

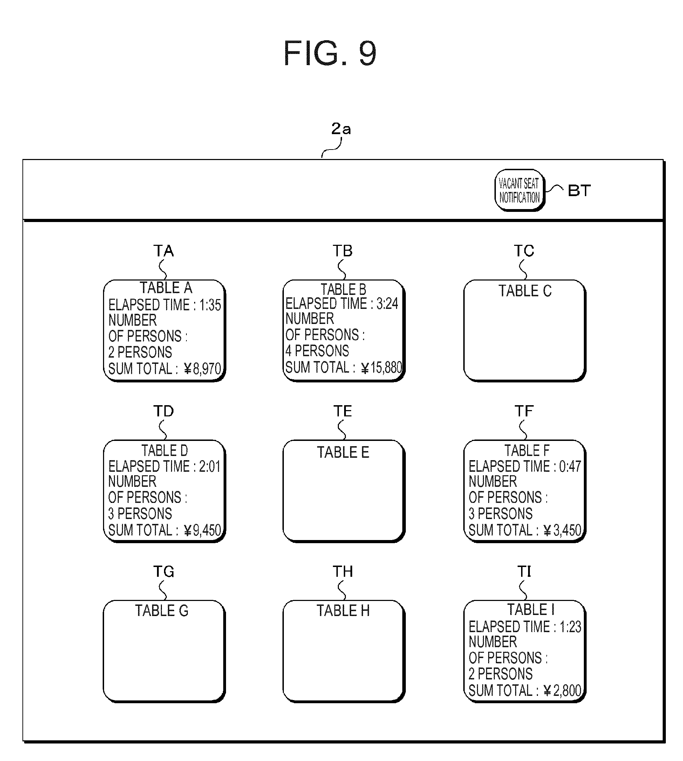

Incidentally, in the above-mentioned embodiment, various kinds of buttons can be appropriately disposed on the screen of the store terminal 2. For example, as illustrated in Fig. 9, a vacant seat notification button BT may be disposed on the touch-panel type screen 2a of the store terminal 2. The vacant seat notification button BT is a button for setting whether provision of the vacant seat status information is to be permitted or not. When "ON/OFF" of the vacant seat notification button BT is operated at the store terminal 2, the store terminal 2 notifies the vacant seat management server 1 of a message indicating the "ON/OFF" state thereof after operation.

While the state of the vacant seat notification button BT that is updated with the message that has been notified from the store terminal 2 is in the "ON" state, the vacant seat status providing unit 13 of the vacant seat management server 1 provides the vacant seat status information to the user terminal 3, and while it is in the "OFF" state, it does not provide the vacant seat status information to the user terminal 3.

In addition, for example, also a full occupancy notification button may be disposed on the touch-panel type screen of the store terminal. The full occupancy notification button is a button for forcibly setting the content of the vacant seat status information to be provided to a full occupancy state. When "ON/OFF" of the full occupancy notification button is operated at the store terminal 2, the store terminal 2 notifies the vacant seat management server 1 of a message indicating the "ON/OFF" state thereof after operation.

While the state of the full occupancy notification button that is updated with the message that has been notified from the store terminal 2 is in the "ON" state, the vacant seat status providing unit 13 of the vacant seat management server 1 provides the vacant seat status information indicating the full occupancy state to the user terminal 3 regardless of the content of the vacant seat status information in the vacant seat status information DB 5c, and while it is in the "OFF" state, it provides the vacant seat status information in the vacant seat status information DB 5c at that time point to the user terminal 3.

In a case of not wishing to notify of presence of vacant seats at the discretion of the store side and so forth irrespective of presence of the vacant seats in the store, to stop provision of the above-mentioned vacant seat status information and to forcibly set the vacant seat status information to the full occupancy state can be effectively utilized. As such a situation, for example, there is a case where the vacant seats in the store are already fully booked. When that there exist vacant seats is provided to the customer in such a case, the customer may possibly come to the store, expecting that there will be no waiting time. Accordingly, it becomes possible to improve convenience for the customers by providing the vacant seat notification button and the full occupancy notification button.

In addition, although in the above-mentioned embodiment, the vacant seat management server 1 is equipped with the vacant seat status information DB 5c, it is not always necessary for the vacant seat management server 1 to be equipped with the vacant seat status information DB. In a case where it is not equipped with the vacant seat status information DB, when the vacant seat status providing unit 13 provides the vacant seat status information, the vacant seat status update unit 12 may calculate the number of the vacant tables on the basis of the vacant seat presence/absence information in the vacant seat presence/absence information DB 5b at that time point and may determine the vacant seat status in accordance with the number of the vacant tables.

In addition, although the vacant seat management server 1 in the above-mentioned embodiment is not equipped with a slip information DB, the vacant seat management server 1 may be equipped with the slip information DB. In this case, the vacant seat management server 1 may update the slip information DB and the table information DB 5a on the basis of the slip information received from the store terminal 2.

In addition, although in the above-mentioned embodiment, the vacant seat status information is provided to the user terminal 3, a destination to which the vacant seat status information is provided is not limited to the user terminal. For example, it may be provided to a store terminal other than that of the store corresponding to the vacant seat status information.

### Industrial Applicability

The vacant seat management system and the vacant seat management method according to the present invention are suited to effectively call in the customers.

### Reference Signs List

- 1: vacant seat management server
- 2: store terminal
- 2a: touch-panel type screen
- 3: user terminal
- 5a: table information DB
- 5b: vacant seat presence/absence information DB
- 5c: vacant seat status information DB
- 5d: reservation information DB
- 11: vacant seat presence/absence change unit
- 12: vacant seat status update unit
- 13: vacant seat status providing unit
- 21: frame display unit
- 22: frame information display unit
- 23: table ID transmission unit
- 100: vacant seat management system

## Claims

1. A vacant seat management system comprising:
a frame display unit that displays frames that respectively correspond to a plurality of tables that are arranged in a store on a screen;
a vacant seat presence/absence change unit that, in a case where the one frame has been selected from the frames that have been displayed by the frame display unit, changes vacant seat presence/absence information indicating whether the table that is stored in correspondence with the selected frame is vacant or not to a content indicating that it is not vacant;
a vacant seat status update unit that updates vacant seat status information indicating what extent of vacant seats is present in the store on the basis of the vacant seat presence/absence information; and
a vacant seat status providing unit that provides the vacant seat status information.

2. The vacant seat management system according to claim 1, further comprising:
a frame information display unit that, in a case where the one frame has been selected from the frames that have been displayed by the frame display unit and slip information corresponding to the selected frame has been input, displays frame information that includes a time elapsed after having sat at the table, a number of persons who use the table and a sum total of commodities that have been ordered at the table in the frame that has been selected on the basis of the input slip information.

3. The vacant seat management system according to claim 2, wherein
the frame display unit, in a case where a plurality of the frames in the frames that have been displayed on the screen have been selected in the lump and some of the plurality of selected frames have been brought into contact with one another or superimposed, changes the plurality of selected frames to the one frame and displays it on the screen, and
the frame information display unit displays a longest time in the elapsed times, an added-up value of the numbers of persons and an added-up value of the sum totals that correspond to the plurality of frames, respectively as the elapsed time, the number of persons and the sum total in the one frame that has been changed from the plurality of frames by the frame display unit.

4. The vacant seat management system according to claim 2 or 3, further comprising:
a reservation information storage unit that stores reservation information that includes at least a reserved time and a reserved number of persons, wherein
the frame information display unit, in a case where one piece of the reservation information has been selected from the reservation information that has been stored by the reservation information storage unit and the one frame has been selected from the frames that have been displayed by the frame display unit, displays the frame information in the selected one frame on the basis of the selected one piece of the reservation information, and
the vacant seat presence/absence change unit changes the vacant seat presence/absence information that is stored in correspondence with the selected one frame together with the reservation information to a content indicating that it is not vacant.

5. The vacant seat management system according to any one of claims 1 to 4, wherein
the frame display unit, in a case where the one frame has been selected from the frames that have been displayed on the screen and an instruction to move in different directions has been input, changes the selected one frame to the two frames and displays them on the screen.

6. The vacant seat management system according to any one of claims 1 to 5, wherein
the frame display unit, in a case where the frame that has been displayed on the screen has been moved on the screen while being left selected, changes a display position of the selected frame to a position when the selection has been cancelled.

7. The vacant seat management system according to any one of claims 1 to 6, wherein
the vacant seat status providing unit determines whether the vacant seat status information is to be provided or not in accordance with an operation state of a vacant seat notification button disposed on the screen.

8. A vacant seat management method of managing vacant seats comprising:
the frame displaying step of displaying frames that respectively correspond to a plurality of tables that are arranged in a store on a screen;
the vacant seat presence/absence changing step of, in a case where the one frame has been selected from the frames that have been displayed in the frame displaying step, changing vacant seat presence/absence information indicating whether the table that is stored in correspondence with the selected frame is vacant or not to a content indicating that it is not vacant;
the vacant seat status updating step of updating vacant seat status information indicating what extent of vacant seats is present in the store on the basis of the vacant seat presence/absence information; and
the vacant seat status providing step of providing the vacant seat status information.

9. The vacant seat management method according to claim 8, further comprising:
the frame information displaying step of, in a case where the one frame has been selected from the frames that have been displayed in the frame displaying step and slip information corresponding to the selected frame has been input, displaying frame information that includes a time elapsed after having sat at the table, a number of persons who use the table and a sum total of commodities that have been ordered at the table in the frame that has been selected on the basis of the input slip information.

10. The vacant seat management method according to claim 9, wherein
the frame displaying step, in a case where a plurality of the frames in the frames that have been displayed on the screen have been selected in the lump and some of the plurality of selected frames have been brought into contact with one another or superimposed, changes the plurality of selected frames to the one frame and displays it on the screen, and
the frame information displaying step displays a longest time in the elapsed times, an added-up value of the numbers of persons and an added-up value of the sum totals that correspond to the plurality of the frames, respectively as the elapsed time, the number of persons and the sum total in the one frame that has been changed from the plurality of frames in the frame displaying step.

11. The vacant seat management method according to claim 9 or 10, further comprising:
the reservation information storing step of storing reservation information that includes at least a reserved time and a reserved number of persons, wherein
the frame information displaying step, in a case where one piece of the reservation information has been selected from the reservation information that has been stored in the reservation information storing step and the one frame has been selected from the frames that have been displayed in the frame displaying step, displays the frame information in the selected one frame on the basis of the selected one piece of the reservation information, and
the vacant seat presence/absence changing step changes the vacant seat presence/absence information that is stored in correspondence with the selected one frame together with the reservation information to a content indicating that it is not vacant.

12. The vacant seat management method according to any one of claims 8 to 11, wherein
the frame displaying step, in a case where the one frame has been selected from the frames that have been displayed on the screen and an instruction to move in different directions has been input, changes the selected one frame to the two frames and displays them on the screen.

13. The vacant seat management method according to any one of claims 8 to 12, wherein
the frame displaying step, in a case where the frame that has been displayed on the screen has been moved on the screen while being left selected, changes a display position of the selected frame to a position when the selection has been cancelled.

14. The vacant seat management method according to any one of claims 8 to 13, wherein
the vacant seat status providing step determines whether the vacant seat status information is to be provided or not in accordance with an operation state of a vacant seat notification button disposed on the screen.
